# EUROPEAN PATENT APPLICATION

(11) **EP 2 317 726 A1**
(43) Date of publication of application: **04.05.2011**
(21) Application number: 10175683.1
(22) Date of filing: 08.09.2010
(51) Int. Cl.: H04L 29/08, H04W 84/18

(54) **Transport independent service discovery**

(30) Priority: 03.11.2009 US 611426 P
(71) Applicant: Nokia Corporation, 02150 Espoo (FI)
(72) Inventor: Palin, Arto, 37830, Viiala (FI); Reunamäki, Jukka, 33820, Tampere (FI)
(74) Representative: Nokia Corporation

(57) **Abstract**

A system for disseminating resource (e.g., service) availability information throughout a group of wireless-enabled apparatuses. For example, one or more apparatuses may act as service information holders configured to maintain information regarding their own services, as well as about services that are available from other apparatuses that were previously in communication with the service information holding apparatuses. As a result, information regarding available resources in multiple apparatuses may be obtained from a single apparatus via a single wireless communication protocol, regardless of whether the service is actually accessible via the wireless communication protocol, or even available from the apparatus that is performing the advertising.

## Description

### 1. Field of Invention:

Various embodiments of the present invention relate to wireless communication, and in particular, to wirelessly disseminating available service information between apparatuses.

### 2. Background:

A global wireless infrastructure is beginning to emerge wherein apparatuses rely upon one or more other apparatuses in supporting various functionality. For example, individual apparatuses may operate to provide resources that assist users when engaging in audible and/or visible communication, managing schedules, performing financial transactions, obtaining desired information, etc. Processes such as these, while appearing to act locally, may rely heavily upon wireless interaction with various types of remote resources in order to execute their respective function. Often local components such as communication interfaces, browsers, applications, etc. will utilize wireless communication in order to transmit and/or receive information that may be necessary in order to complete the function that was requested from the apparatus by the user.

Apparatus functionality such as described above not only relies upon accessing desired and/or required resources, but also in determining how these resources may be provided. For example, different apparatuses may be able to provide the same (or similar) services in an environment where many apparatuses are interacting via different forms of wired and/or wireless communication. However, as the many apparatuses may employ a multitude of communication protocols, the identification of particular apparatuses that can provide the desired resource may be complicated by the manner in which this information is obtainable. For example, various communication protocols may provide methodologies for advertising services that are available via the particular communication protocol. Such methods for obtaining service information may therefore omit services available in an apparatus that cannot operate using the communication protocol. Moreover, each apparatus may employ a different set of communication protocols, and thus, may require that an apparatus seeking a resource inquire with each apparatus individually.

### SUMMARY

Various embodiments of the present invention may be directed to a methods, apparatuses, computer program products and systems for disseminating resource (e.g., service) availability information throughout a group of wireless-enabled apparatuses. In accordance with at least one embodiment of the present invention, one or more apparatuses may act as service information holders configured to maintain information regarding their own services, as well as about services that are available from other apparatuses that were previously in communication with the service information holding apparatuses. As a result, information regarding available resources in multiple apparatuses may be obtained from a single apparatus via a single wireless communication protocol, regardless of whether the service is actually accessible via the wireless communication protocol, or even available from the apparatus that is performing the advertising.

In various example implementations, apparatuses may transmit wireless inquiries to other apparatuses within communication range. The other apparatuses may respond to these inquiries, and the responses may comprise indication of extended inquiry response (EIR). For example, a responding apparatus may utilize the EIR to indicate that it holds information related to resource (e.g., service) availability for other apparatuses that have previously communicated with the responding apparatus. Inquiring apparatuses may then transmit requests for the service information. For example, in instances where Bluetooth is being utilized to facilitate interaction, inquiring apparatuses may send service discovery protocol (SDP) requests in order to obtain the available service information that is being maintained in service information holder apparatuses.

Information that is maintained, advertised and provided by service information holder apparatuses may, for example, be organized so as to separate local service information from non-local service information. Local service information may comprise an indication of various resources that are available from the service information holder apparatus itself. Non-local service information may comprise an indication of various resources that are available from other apparatuses that have previously been encountered by the service information holder apparatus. In accordance with various embodiments of the present invention, these categories may be broken down further based on wireless protocol support, category of service, etc. For example, each category may include services offered via the communication medium currently being utilized, and also services that are available via other wireless communication mediums. Furthermore, information provided by service information holder apparatuses may facilitate the access and usage of these resources by other apparatuses. As a result, apparatuses may identify desired services, service providers and communication configurations usable with each service.

The foregoing summary includes example embodiments of the present invention that are not intended to be limiting. The above embodiments are used merely to explain selected aspects or steps that may be utilized in implementations of the present invention. However, it is readily apparent that one or more aspects, or steps, pertaining to an example embodiment can be combined with one or more aspects, or steps, of other embodiments to create new embodiments still within the scope of the present invention. Therefore, persons of ordinary skill in the art would appreciate that various embodiments of the present invention may incorporate aspects from other embodiments, or may be implemented in combination with other embodiments.

### DESCRIPTION OF DRAWINGS

The invention will be further understood from the following description of various example embodiments, taken in conjunction with appended drawings, in which:

FIG. 1A discloses example apparatuses, systems, configurations, etc. that may be utilized when implementing the various embodiments of the present invention

FIG. 1B discloses further detail regarding an example apparatus configuration that may be utilized when implementing the various embodiments of the present invention.

FIG. 2A discloses an example Bluetooth communication protocol stack usable in accordance with at least one embodiment of the present invention.

FIG. 2B discloses an example of various Bluetooth communication profiles usable in accordance with at least one embodiment of the present invention.

FIG. 2C discloses an example of a Bluetooth communication service discovery profile interaction usable in accordance with at least one embodiment of the present invention.

FIG. 2D discloses an example operational scenario including a plurality of apparatuses that will be utilized to explain various embodiments of the present invention.

FIG. 3 discloses the example levels of a wireless communication architecture in accordance with at least one embodiment of the present invention.

FIG. 4 discloses an example of services being utilized to create service nodes on a billboard in accordance with at least one embodiment of the present invention.

FIG. 5A discloses an example Network on Terminal Architecture in accordance with at least one embodiment of the present invention.

FIG. 5B discloses an example transport table in accordance with at least one embodiment of the present invention.

FIG. 6 discloses an example of communication to a billboard utilizing a connection map in accordance with at least one embodiment of the present invention.

FIG. 7 discloses an example of an extended information architecture that may be implemented in accordance with at least one embodiment of the present invention.

FIG. 8 discloses an example of how the various embodiments of the present invention may impact the example originally set forth in FIG. 2D.

FIG. 9 discloses a flowchart for an example process, taken from an inquiring apparatus perspective, in accordance with various embodiments of the present invention.

FIG. 10 discloses the example process of FIG. 9, taken from a service information holder apparatus perspective, in accordance with various embodiments of the present invention.

### DESCRIPTION OF EXAMPLE EMBODIMENTS

While the invention has been described below in terms of a multitude of example embodiments, various changes can be made therein without departing from the spirit and scope of the invention, as described in the appended claims.

### I. Example system with which embodiments of the present invention may be implemented

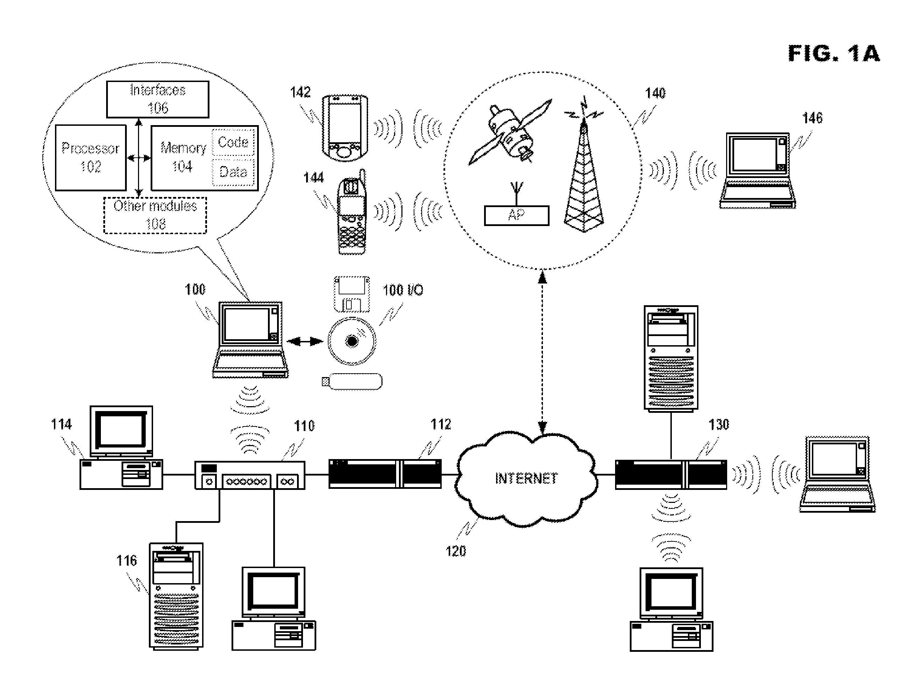

An example of a system that is usable for implementing various embodiments of the present invention is disclosed in FIG. 1A. The system comprises elements that may be included in, or omitted from, configurations depending, for example, on the requirements of a particular application, and therefore, is not intended to limit present invention in any manner.

Computing device 100 may correspond to various processing-enabled apparatuses including, but not limited to, micro personal computers (UMPC), netbooks, laptop computers, desktop computers, engineering workstations, personal digital assistants (PDA), computerized watches, wired or wireless terminals/nodes/etc., mobile handsets, set-top boxes, personal video recorders (PVR), automatic teller machines (ATM), game consoles, or the like. Elements that represent basic example components comprising functional elements in computing device 100 are disclosed at 102-108. Processor 102 may include one or more devices configured to execute instructions. In at least one scenario, the execution of program code (e.g., groups of computer-executable instructions stored in a memory) by processor 102 may cause computing device 100 to perform processes including, for example, method steps that may result in data, events or other output activities. Processor 102 may be a dedicated (e.g., monolithic) microprocessor device, or may be part of a composite device such as an ASIC, gate array, multi-chip module (MCM), etc.

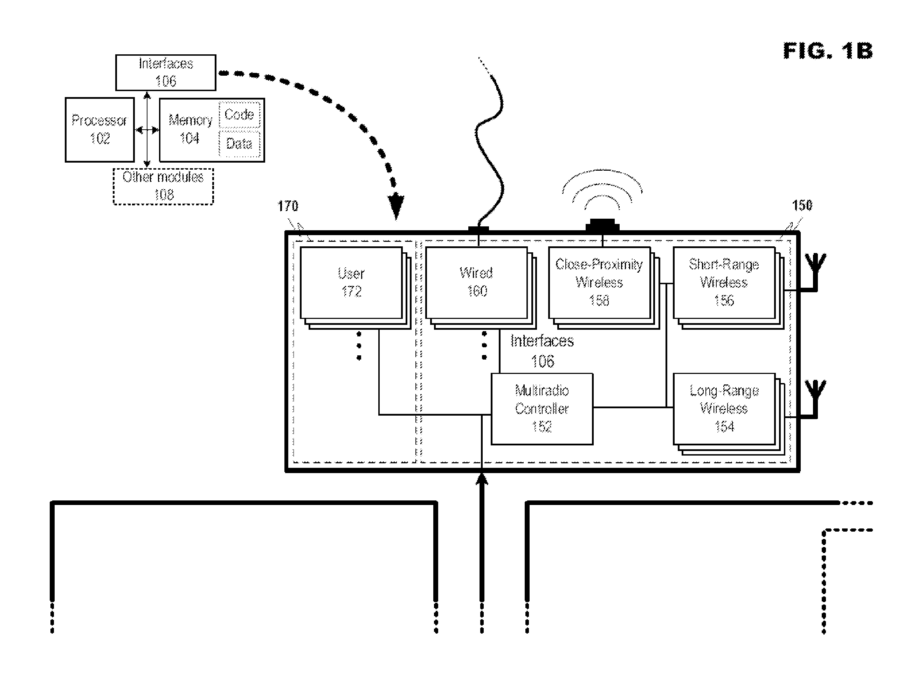

Processor 102 may be electronically coupled to other functional components in computing device 100 via a wired or wireless bus. For example, processor 102 may access memory 102 in order to obtain stored information (e.g., program code, data, etc.) for use during processing. Memory 104 may generally include removable or imbedded memories that operate in a static or dynamic mode. Further, memory 104 may include read only memories (ROM), random access memories (RAM), and rewritable memories such as Flash, EPROM, etc. Examples of removable storage media based on magnetic, electronic and/or optical technologies are shown at 100 I/O in FIG. 1, and may serve, for instance, as a data input/output means. Code may include any interpreted or compiled computer language including computer-executable instructions. The code and/or data may be used to create software modules such as operating systems, communication utilities, user interfaces, more specialized program modules, etc.

One or more interfaces 106 may also be coupled to various components in computing device 100. These interfaces may allow for inter-apparatus communication (e.g., a software or protocol interface), apparatus-to-apparatus communication (e.g., a wired or wireless communication interface) and even apparatus to user communication (e.g., a user interface). These interfaces allow components within computing device 100, other apparatuses and users to interact with computing device 100. Further, interfaces 106 may communicate machine-readable data, such as electronic, magnetic or optical signals embodied on a computer readable medium, or may translate the actions of users into activity that may be understood by computing device 100 (e.g., typing on a keyboard, speaking into the receiver of a cellular handset, touching an icon on a touch screen device, etc.) Interfaces 106 may further allow processor 102 and/or memory 104 to interact with other modules 108. For example, other modules 108 may comprise one or more components supporting more specialized functionality provided by computing device 100.

Computing device 100 may interact with other apparatuses via various networks as further shown in FIG. 1A. For example, hub 110 may provide wired and/or wireless support to devices such as computer 114 and server 116. Hub 110 may be further coupled to router 112 that allows devices on the local area network (LAN) to interact with devices on a wide area network (WAN, such as Internet 120). In such a scenario, another router 130 may transmit information to, and receive information from, router 112 so that devices on each LAN may communicate. Further, all of the components depicted in this example configuration are not necessary for implementation of the present invention. For example, in the LAN serviced by router 130 no additional hub is needed since this functionality may be supported by the router.

Further, interaction with remote devices may be supported by various providers of short and long range wireless communication 140. These providers may use, for example, long range terrestrial-based cellular systems and satellite communication, and/or short-range wireless access points in order to provide a wireless connection to Internet 120. For example, personal digital assistant (PDA) 142 and cellular handset 144 may communicate with computing device 100 via an Internet connection provided by a provider of wireless communication 140. Similar functionality may be included in devices, such as laptop computer 146, in the form of hardware and/or software resources configured to allow short and/or long range wireless communication.

Further detail regarding example interface component 106, shown with respect to computing device 100 in FIG. 1A, is now discussed with respect to FIG. 1B. Initially, interfaces such as disclosed at 106 are not limited to use only with computing device 100, which is utilized herein only for the sake of explanation. As a result, interface features may be implemented in any of the apparatuses that are disclosed in FIG. 1 (e.g., 142, 144, etc.) As previously set forth, interfaces 106 may include interfaces both for communicating data to computing apparatus 100 (e.g., as identified at 150) and other types of interfaces 170 including, for example, user interface 172. A representative group of apparatus-level interfaces is disclosed at 150. For example, multiradio controller 152 may manage the interoperation of long range wireless interfaces 154 (e.g., cellular voice and data networks), short-range wireless interfaces 156 (e.g., Bluetooth and WLAN networks), close-proximity wireless interfaces (e.g., for interactions where electronic, magnetic, electromagnetic and optical information scanners interpret machine-readable data), wired interfaces 160 (e.g., Ethernet), etc. The example interfaces shown in FIG. 1B have been presented only for the sake of explanation herein, and thus, are not intended to limit the various embodiments of the present invention to utilization of any particular interface. Embodiments of the present invention may also utilize interfaces that are not specifically identified in FIG. 1B.

Multiradio controller 152 may manage the operation of some or all of interfaces 154-160. For example, multiradio controller 152 may prevent interfaces that could interfere with each other from operating at the same time by allocating specific time periods during which each interface is permitted to operate. Further, multiradio controller 152 may be able to process environmental information, such as sensed interference in the operational environment, to select an interface that will be more resilient to the interference. These multiradio control scenarios are not meant to encompass an exhaustive list of possible control functionality, but are merely given as examples of how multiradio controller 152 may interact with interfaces 154-160 in FIG. 1B.

### II. Basic profiles for wireless communication

While the following disclosure makes frequent reference to Bluetooth structures and operation, the various embodiments of the present invention disclosed herein are not limited to implementation only with this particular communication protocol. Bluetooth has been utilized merely for the sake of explanation, and is not intended to affect the breadth/scope of the present invention. Other wired/wireless communication transports may also be employed accordingly.

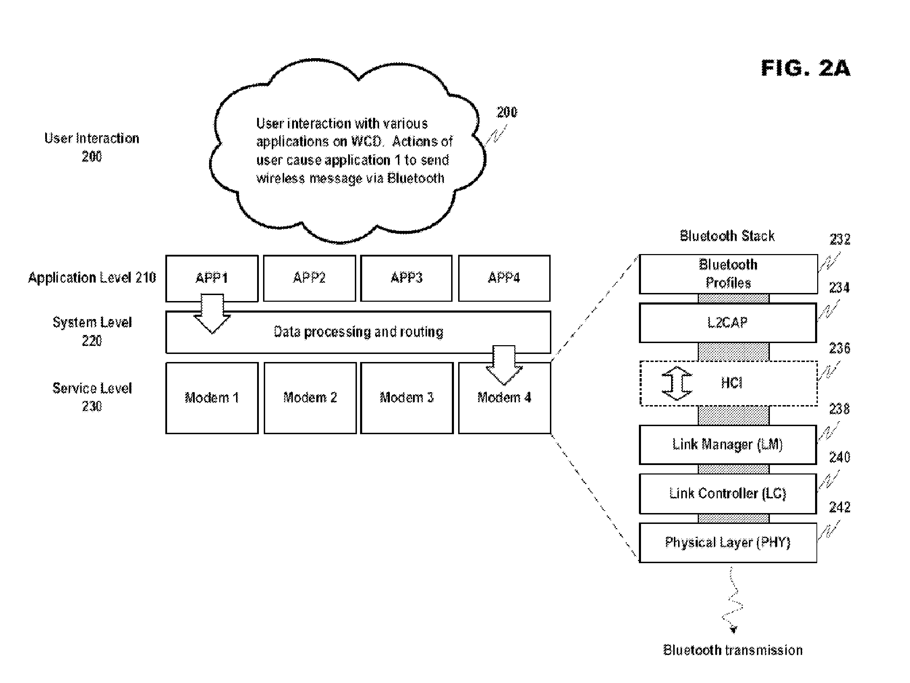

FIG. 2A discloses an example communication "stack" for explaining operation in accordance with various embodiments of the present invention. Top level 200 may support user interaction with an apparatus. Interaction may involve, for example, users entering information via a user interface in order to activate functionality in application level 210. In the application level, programs that support specific functionality within apparatuses may interact with both the user and the system level. These programs may include various applications such as programs for conveying visual information (e.g., web browser, DVB-H receiver, etc.), audio information (e.g., cellular telephone, voice mail, conferencing software, DAB or analog radio receiver, etc.), recording information (e.g., digital photography software, word processing, scheduling, etc.) or other information processing. Actions initiated in application level 210 may require information to be transmitted from, or received into, the apparatus. For instance, Bluetooth communication is being requested in the example scenario disclosed in FIG. 2A, which may trigger a request for access to system level resources in order to initiate the required processing and routing of data.

System level 220 may process data requests and route the data for transmission. Processing may include, for example, calculation, translation, conversion and/or packetizing of data. Any resulting information may then be routed to an appropriate communication resource in service level 230. If desired communication resources are active and available in service level 230, the packets may then be routed accordingly for delivery via wired or wireless transmission. In some instances there may be a plurality of wired and/or wireless communication modules that support one or more different communication transports. For instance, in FIG. 2A radio modem 4 may be active and available to transmit data packets via Bluetooth communication. However, communication modules (as a hardware resource) need not be dedicated to specific transports, and thus, may be employed for different types of wired/wireless communication depending on the requirements of the transport and the hardware characteristics of the module.

In the particular example disclosed in FIG. 2A, radio modem 4 may implement a series of protocol steps (e.g., depicted as a protocol stack) when transmitting/receiving using Bluetooth. The protocol stack may include elements that convey information from the system level to the physical layer, from which it may be transmitted wirelessly to another device. At the upper-most level, Bluetooth Profiles 232 may include various types of definitions describing, for example, wireless communication configurations needed to access other apparatuses or standard profiles that applications may utilize when engaging in wireless communication via Bluetooth. Bluetooth profiles 232 for other apparatuses may be established through "pairing." Pairing is a process where apparatuses may participate in an initial polling/response interaction to exchange identification and connection information that may be saved in order to expedite reconnection at a later time. After applications and/or target apparatuses are established, information to be sent must be formatted for transmission. L2CAP level 234 includes at least a logical link controller and adaptation protocol that support higher level protocol multiplexing packet segmentation and reassembly and the conveyance of quality of service (QoS) information. Information prepared by L2CAP level 234 may then be passed to application-optional host controller interface (HCI) 236. This layer may act as a command interface to lower link manager protocol (LMP) layers (e.g., link manager (LM) 238 and link controller (LC) 240). LM 238 may establish link setup, authentication, configuration and may perform other protocol steps pertaining to connection establishment. LC 240 may also help to manage active links between apparatuses by handling low-level baseband protocols. Wireless packet transmission/reception may then be facilitated through the wireless hardware (e.g., modem, antenna, etc.) and corresponding support software associated with physical layer (PHY) 242. The disclosed Bluetooth protocol stack may also be utilized in an order reversed from that disclosed above in order to receive wireless transmissions.

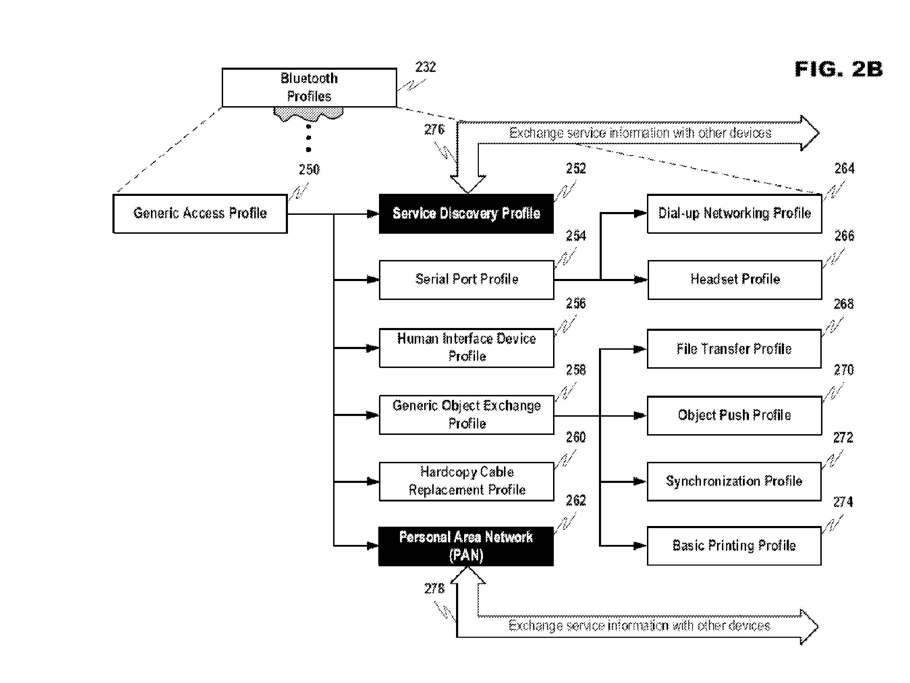

In accordance with at least one embodiment of the present invention, FIG. 2B discloses further detail regarding Bluetooth profiles layer 232. The profiles 250-274 define various standardized tasks that may be completed using Bluetooth communication. For example, developers may check these profiles in order to make sure that their application will interface correctly with the Bluetooth. Profiles may be organized in a hierarchy, wherein each subsequent profile relies on the definitions in the profile from which it depends. General access profile (GAP) 250 may provide the basis for all other profiles, and may provide a consistent means with which to establish a wireless link between apparatuses (e.g., apparatus requirements and procedures needed to establish links). Under GAP 250 exist basic profiles that may be used to execute transactions between apparatuses. Service discovery profile (SDP) 252 delineates how services can be identified in other apparatuses. Serial port profile (SPP) 254 defines how a virtual serial port may be established between apparatuses. Human interface device profile (HID) 256 defines how pointing devices and other user interface peripherals can wirelessly interact with an apparatus. Generic object exchange profile (GOEP) 258 is a general profile that controls the transfer of software objects between devices, and Hardcopy cable replacement profile (HCRP) 260 defines how driver-based printing is done over a wireless link. Personal Area Network (PAN) profile 252 may be used when configuring networks with other apparatuses, regardless of device type (e.g., mobile apparatus, access point, etc.). PAN users can connect to either Network Access Points (NAP) or to Ad-hoc networks.

The various profiles within BluetoothProfiles 232 may also be interdependent. For example, dial-up networking profile (DUN) 264 and headset profile (HSP) 266 may depend on configuration information established in SPP 254. DUN 264 may be utilized for accessing the Internet using Bluetooth, while HSP 316 controls how Bluetooth-enabled headsets communicate with other apparatuses. In a similar relationship, file transfer profile (FTP) 268, object push profile (OPP) 270, synchronization profile (SYNC) 272 and Basic Printing Profile (BPP) 274 may depend on GEOP 308. These profiles are all used to define specific instances where information is being transferred between apparatuses. Examples of information that may be transferred include files, folders, calendar information, email information, virtual business cards and various other types of electronic data that may be pushed to, or pulled from, an apparatus.

### III. Service discovery

Apparatuses may contain various resources that provide services. Some services are tasked primarily with satisfying requirements that exist on the same apparatus, while other services may address requirements existing on other apparatuses. Services may be employed, for example, in situations where data residing on one apparatus (e.g., multimedia data) is required on another apparatus. In this scenario many individual services may be accessed in order to support an interaction which appears relatively simple on its face. Services may be invoked as a part of link establishment/maintenance/security, operation interface functionality like browsing in order to locate desired information, conveying information (e.g., streaming), copy protection, etc.

However, available services must first be identified before they can be accessed. Using Bluetooth as an example, at least two profiles may be utilized in the identification process. SDP 252 may "discover" accessible services residing in other apparatuses by exchanging service information as shown at 276 in FIG. 2B. One example of a discoverable service is PAN profile 262. After establishing a network with other devices using PAN profile 262, further discovery can be performed in order to find services in the network that may not have been identifiable by SDP 252 during the initial discovery (e.g., via further service information exchanges at 278).

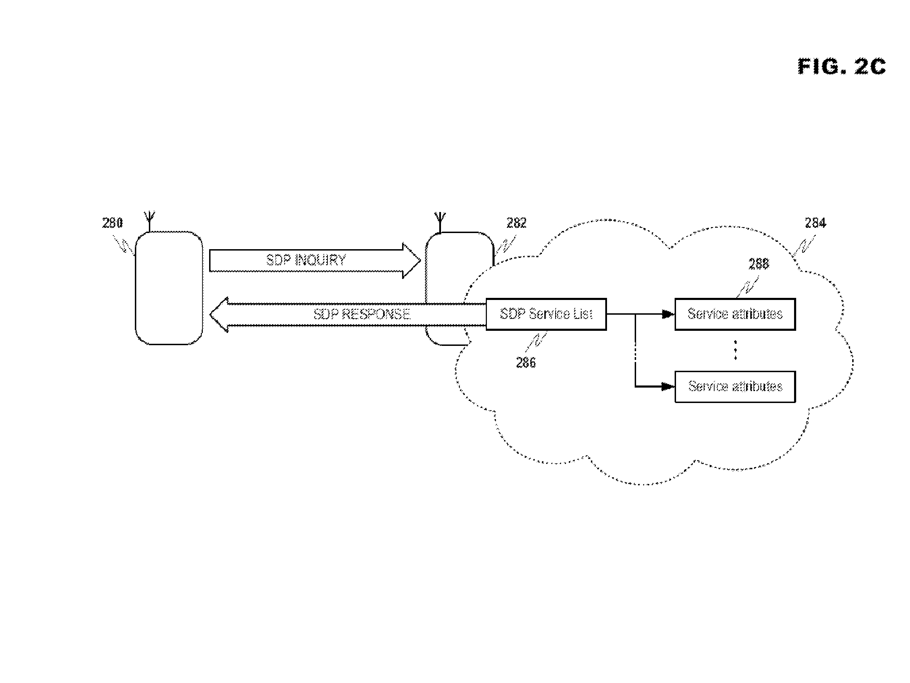

An example of service identification in accordance with SDP 252 is disclosed in FIG. 2C. Apparatus 280 may transmit a wireless service discovery protocol inquiry to apparatus 282. As defined in SDP 252, Bluetooth related-resources 284 in apparatus 282 may include SDP service list 286 comprising all of the services in apparatus 282 that may be Bluetooth compatible. SDP service list 286 may also comprise service attributes 288 corresponding to each Bluetooth-compatible service. Service attributes 288 may provide configuration information that another apparatus may need in order to access and utilize the service, such as information related to the particular communication protocols usable with a service, information on how the service is to be accessed, the inputs needed for and/or the outputs provided by a service, etc. Some or all of this information may be provided to apparatus 280 in a response message. After identifying services that are available in apparatus 282, apparatus 280 may access these services in performing activities including, for example, accessing data stored on apparatus 282, etc.

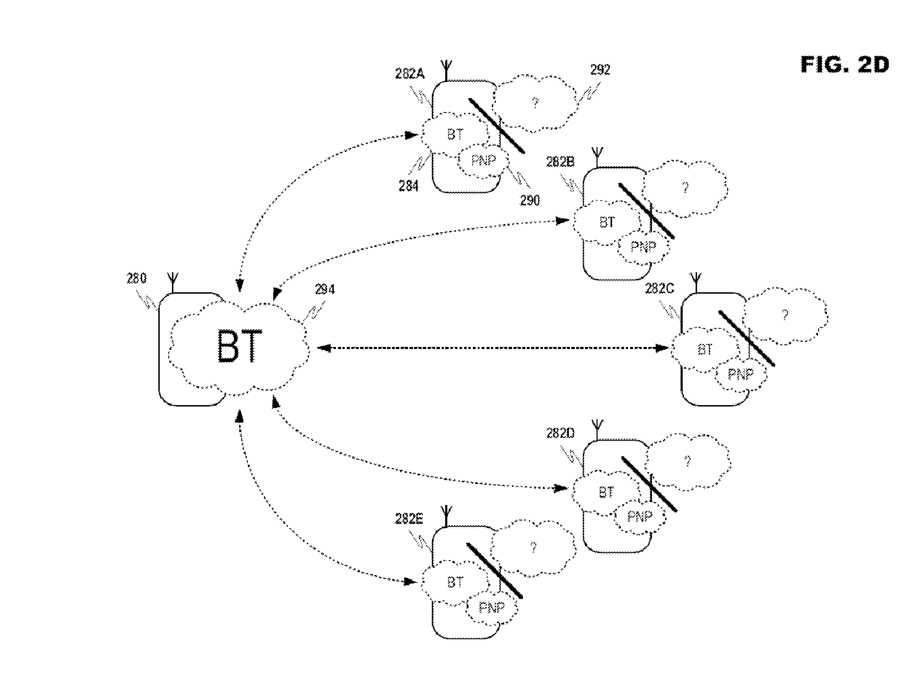

While SDP 252 may provide a useful tool for service discovery, protocols of this type have inherent limitations that will be explained with respect to FIG. 2D, which discloses an example operational scenario wherein apparatus 280 is inquiring about services available in a plurality of other apparatuses 282A to 282E. In order to obtain the services available in all of the devices depicted in FIG. 2D, apparatus 280 must communicate with Bluetooth resources 284 in each device. This communication would return at least the Bluetooth-compatible resources that are available in each apparatus. In some instances there may be service information corresponding to other protocols that is also available over Bluetooth. For example, Bluetooth PAN Profile 262 may be used to discover services that employ Universal Plug and Play (UPnP) as shown at 290.

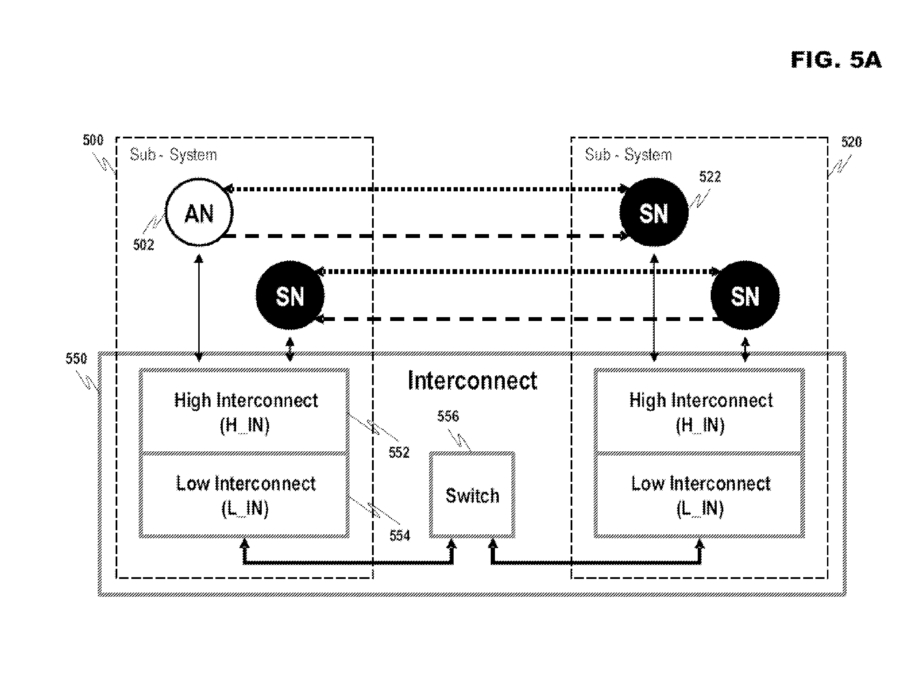

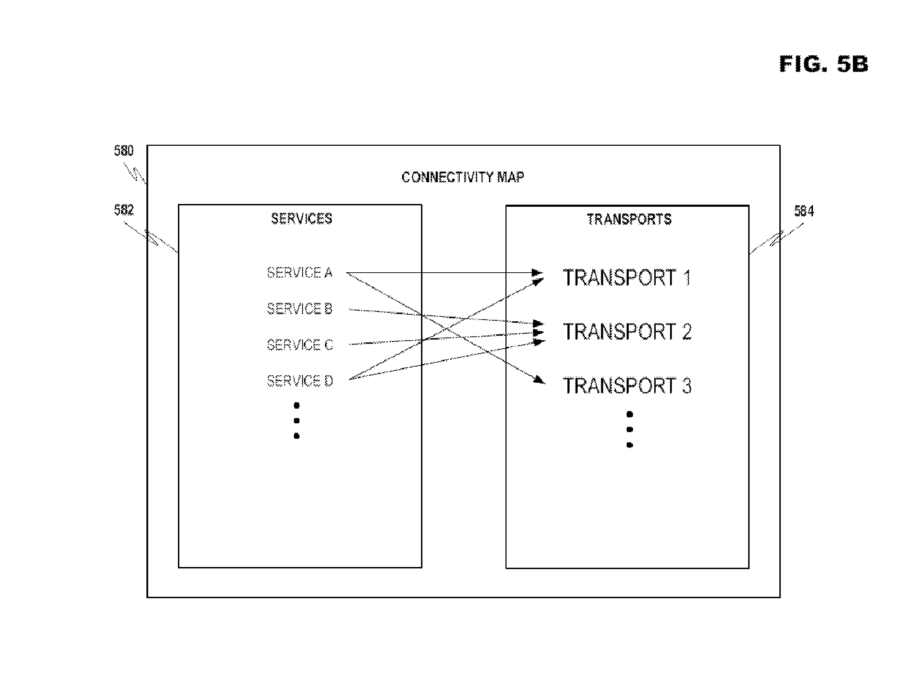

Initially, the operational scenario described above with respect to FIG. 2D omits the discovery in apparatuses 282A to 282E of any services 292 that do not support Bluetooth. Initially, it is apparent that Bluetooth discovery would overlook services that only operate using a different communication protocol, which would then necessitate apparatus 280 reconnecting to each apparatus 282A to 282E using different communication protocols in order to discover these services. Moreover, a growing segment of services that will be discussed in regard to FIG. 5-6 relate to cloud-type computing architectures that may, in some instances, be purposely communication transport independent. The need for apparatus 280 to establish an individual Bluetooth connection with each apparatus 282A to 282E in FIG. 2D puts a large Bluetooth communication burden on apparatus 280 as shown at 294. This burden may not only negatively impact the communication processing resources supporting Bluetooth communication in apparatus 280 due to the increased traffic, but may also consume a large amount of other resources (e.g., power) affecting overall device operation.

### IV. Example Network on Terminal (NoTA) architecture.

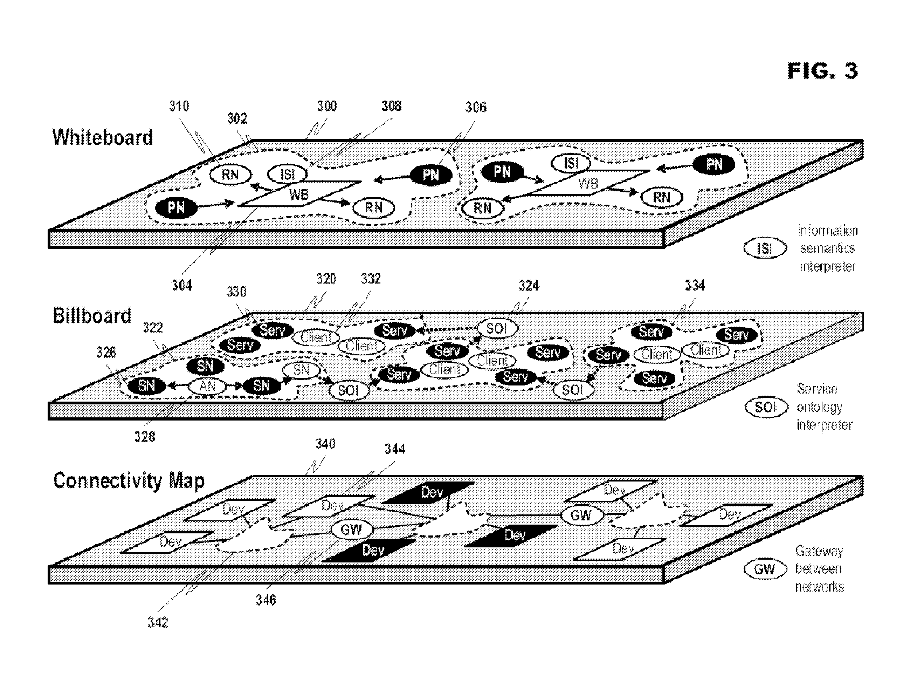

As briefly referenced above, some services that are emerging in wireless-enabled apparatuses may be associated with communication but are deliberately designed to be transport-independent. Network on Terminal Architecture (NoTA) is an example wireless communication architecture that, in accordance with at least one embodiment of the present invention, possesses such characteristics. An example of NoTA is disclosed in FIG. 3. Whiteboard 300 is disclosed as one possible example of NoTA service. At this level, operational groups 302 may be formed including whiteboards 304 and various application nodes. Application nodes may correspond to various applications existing on a plurality of apparatuses, and may be utilized to exchange information between these applications, for example, by placing data into, and removing data from, whiteboard 304. For example, the types of nodes may comprise proactive nodes (PN) 306 that are utilized to place information into whiteboard 304, reactive nodes (RN) 310 are utilized to take information from whiteboard 304. Information semantics interpreter (ISI) 308 may link different whiteboards together. Utilizing such constructs, Whiteboard 304 may provide a means for standardizing application interaction that overcomes incompatibilities.

Billboard level 320 facilitates interaction between services available on devices participating in NoTA. For instance, Billboard level 320 provides sharing of service-related information (e.g., service identification information, functionality, etc.), as well as information that may be necessary when accessing and/or utilizing each service. Services 330 and clients 332 that may utilize these services may be organized in service domains 322. In at least one scenario, service domains 322 may each correspond to a particular protocol, such as Universal Plug and Play (UPnP), Bluetooth Service Discovery Protocol (BT SDP), Bonjour, etc. In each service domain 322, services 330 may be represented by service nodes (SN) 326, and likewise, application nodes (AN) 328 may correspond to applications. Further, service domains 322 may interact utilizing service ontology interpreters (SOI) 324. SOI 324 allows service domains 322 to interact with other service domains 334 in the service level, even if service domains 322 reside on different apparatuses (e.g., to provide access information to other service domains 322).

Connectivity map 340 may define available connection methods, possible routing methods and topology for the apparatuses that are communicating using an NoTA interconnect. In accordance with at least one embodiment of the present invention, devices 344 may be linked in directly connected groups 342. Examples of directly connected groups (Dev) 342 may include devices connected via a Bluetooth piconet, a WLAN network, a wUSB wireless link, etc. Each directly connected group of devices 342 may further be linked by gateways (GW) 346.

### V. Service node implementation

Services may be defined as functionality offered and/or derived from software programs. Services can pertain to all aspects of device functionality and can be provided, for example, by an operating system loaded on an apparatus, or alternatively, may be added to the apparatus by separate software programs related to communication, security, productivity, device resource management, entertainment, etc. According to at least one embodiment of the present invention, service nodes may represent services available on the apparatuses linked by NoTA.

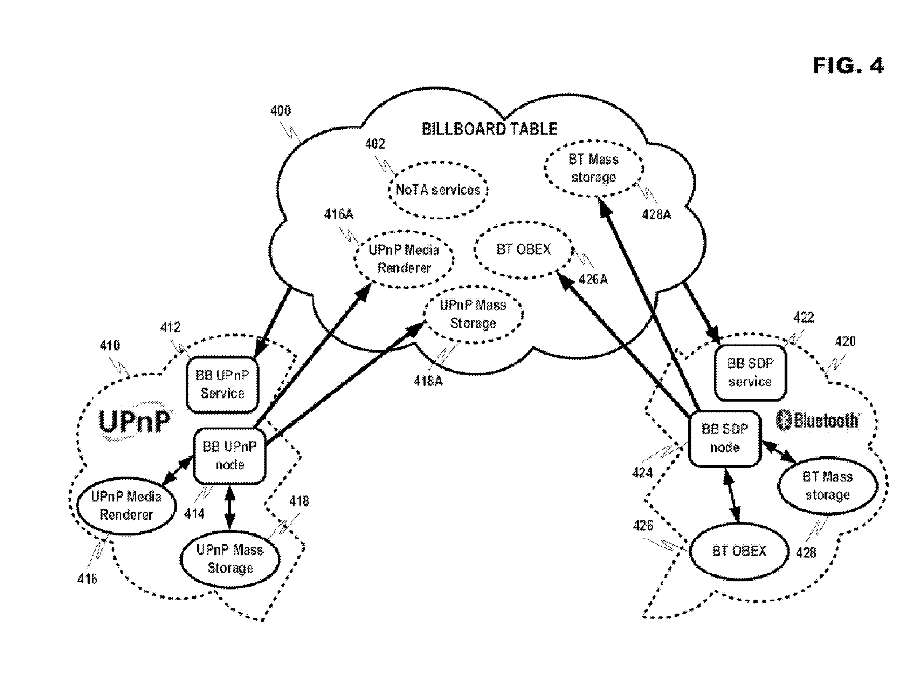

FIG. 4 discloses an example of billboard functionality in accordance with at least one embodiment of the present invention. Billboard 400 may comprise a shared memory space established amongst one or more wired or wireless apparatuses. The scenario disclosed in FIG. 4 may further include a protocol such as UPnP 410 installed on an apparatus, and Bluetooth SDP 420 installed on another apparatus. Billboard 400 may interact with these protocols using one or more services installed these apparatuses, such as example billboard services BB UPnP service 412 and BB SDP service 422. BB services 412 and 422 are typically components of UPnP and BT architecture, but they can also be representative components provided as part of the NoTA.

UPnP 410 may offer services locally to the apparatus on which it is installed. Example services may include UPnP media renderer service 416 and UPnP mass storage service 418. Similarly, in the example of FIG. 4 Bluetooth SDP 420 may provide BT OBEX service 426 and BT mass storage service 428 on a separate apparatus. The particular UPnP and BT services identified in FIG. 4 have been selected only for the sake of example herein, and are not intended to limit the scope of services usable with embodiments of the present invention. While services are normally only accessible to applications residing in the same service domain, NoTA may facilitate interaction between various services and/or applications, regardless of access method. For example, while interaction between different service domains is not specifically defined, service information and access methods can still be shared between domains utilizing NoTA.

At least one embodiment of the present invention may operate by creating service information entries corresponding to services offered on each device in billboard table 400. In the scenario disclosed in FIG. 4, BB UPnP node 414 and BB SDP node 424 may create service information entries UPnP media renderer service 416A and UPnP mass storage service 418A, as well as BT OBEX service 416A and BT mass storage service 428A, respectively. These service information entries may all exist in a common billboard table 400, despite the actual protocols and services residing on separate devices. Further, the service information entries may provide information about services to other services and/or applications, such as the name of the service, service properties, pairing & authentication information utilized in accessing a particular service and/or transport mediums usable with each service. This service information may be obtained, for example, via BB SDP service 424 if billboard table 400 is accessed from the BT domain, or BB UPnP 414 service if billboard table 400 is accessed from the UPnP domain. In architectures such as NoTA, it may also be possible to provide direct access to billboard services. NoTA services 402 may, in accordance with at least one embodiment of the present invention, establish initial communication between participating apparatuses via a common wireless communication transport in order to establish a shared memory space that will be utilized as Billboard table 400.

### VI. Underlying architecture

FIG. 5A discloses an example of an underlying logical architecture that may be utilized in implementing NoTA. NoTA may be configured as multiple subsystems (e.g., 500 and 520) coupled by interconnect 550. NoTA interconnect 550 may comprise two layers: High Interconnect (H_IN) layer 552 and Low Interconnect (L_IN) layer 554 that are coupled by switch 556. Low interconnect layer 554 may include ISO/OSI layers L1 - L4 and may provide transport socket type interface upwards. High Interconnect layer 552 may act as middleware between L_IN 554 and the higher level Application nodes (AN) 502 and Service nodes (SN) 522 residing in subsystems 500 and 520, respectively. H IN 552 functionality may provide client nodes (AN 502 or SN 522) direct access to services (without having to disclose the location of the latter). Communication may be connection-oriented, meaning that before any service or data communication takes place, connection setup procedures would need to be carried out. Security features may also be added to countermeasure identified threats. As set forth in the example of FIG. 5A, NoTA may provide intra-device service access making it possible to build independent subsystems providing both services and applications. Moreover, example implementations may include several individual NoTA devices involved in direct inter sub-system communication.

FIG. 5B discloses another structure that may be implemented in accordance with various embodiments of the present invention. Connectivity map 580 may associate services available on apparatuses participating in billboard table 400 with communication transports that may be utilized in conjunction with each service. Examples of communication transports may include, but are not limited to, wireless communication mediums such as Bluetooth, WLAN, Bluetooth Low Energy (BTLE), wUSB, etc. In addition, at least one embodiment of the present invention may also apply radio technologies to different protocols (e.g., Bluetooth protocols may be implemented over WLAN). However, the various embodiments the present invention are not specifically limited to using these particular communication transports, and may be implemented with other wired or wireless communication mediums that are usable by services offered by various participating apparatuses. Services (e.g., offered by apparatuses) in FIG. 5B may be listed under services 582, and the corresponding available transports are listed under transports 584. Arrows between services 582 and transports 584 indicate the one or more transport mediums that are usable by each service. Information in connectivity map 580 may, in accordance with various embodiments of the present invention, bind billboard table content (e.g., service offerings) and available apparatus connectivity configuration. This information may be utilized, for example, by applications when determining the communication transports that are usable with a particular service. Where two or more transport mediums are usable, a particular communication medium may ultimately be selected based on characteristics such as speed, traffic, priority of executing the service, other active wireless communication mediums, etc.

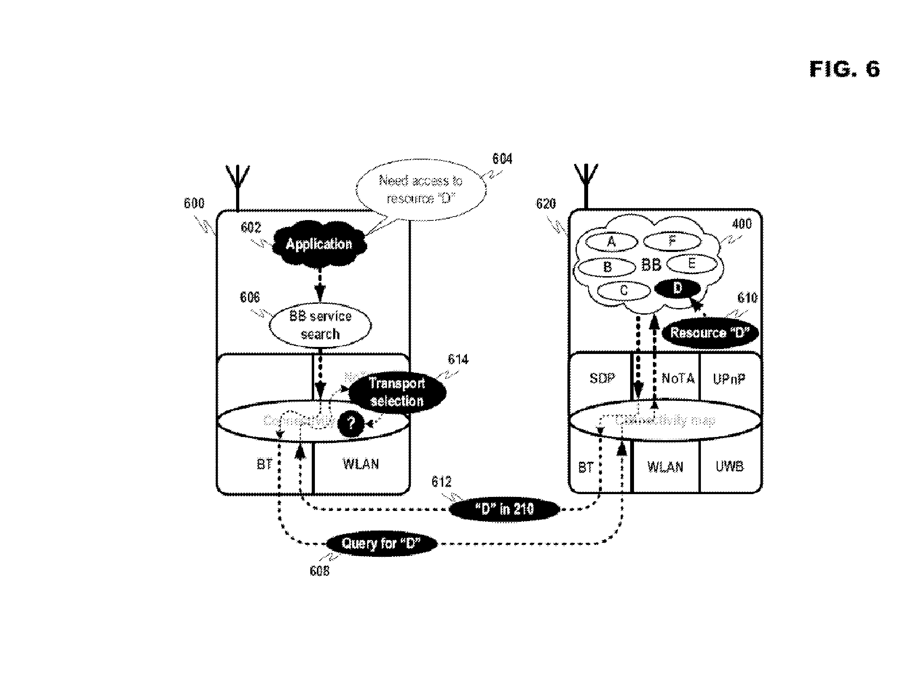

FIG. 6 discloses an example interaction between apparatuses 600 and 620 that are participating in NoTA. Only two apparatuses are disclosed in FIG. 6 for the sake of explanation herein, and thus, the various embodiments of the present invention is not limited to use with only two apparatuses. Interaction in this scenario may be initiated by any participating apparatus, but in the disclosed example is triggered by application 602 in apparatus 600. Application 602 may be, for example, a software/ program module that upon activation, execution or user interaction creates requirements to access a resource (e.g., as shown at 604).

BB search 606 may utilize a transport, such as Bluetooth (BT), to perform query 608 of available resources in the NoTA environment. The same transport may further be used to exchange connectivity map information, which may eventually be utilized in transport selection 614 when appropriate transports are to be selected. The accumulation of this available resource information may help facilitate the identification of potential providers for requested resources, such as resource "D" requested by application 602. For example, information in BB 400 may disclose that resource "D" 610 actually resides on apparatus 620 in the NoTA environment, and therefore, apparatus 620 is capable of acting as a "provider" for resource "D" to apparatus 600.

A response 612 to inquiry 608 may be returned identifying one or more potential resources (e.g., services, databases, etc.) residing on at least one provider (in this case apparatus 620). However, subsequent transactions cannot be limited to utilizing the transport that was initially selected in order to perform the query. For example, high speed, low power, low throughput transports like Bluetooth Low Energy (BTLE) may be adequate for performing initial queries, but would not be likewise appropriate for further interaction if large amounts of data are to be conveyed, a low error rate is required or other similar requirements exist. Therefore, at 614 a determination may be made as to maintain the current transport or to select a new transport.

### VIII. Example service discovery via service information holder apparatuses

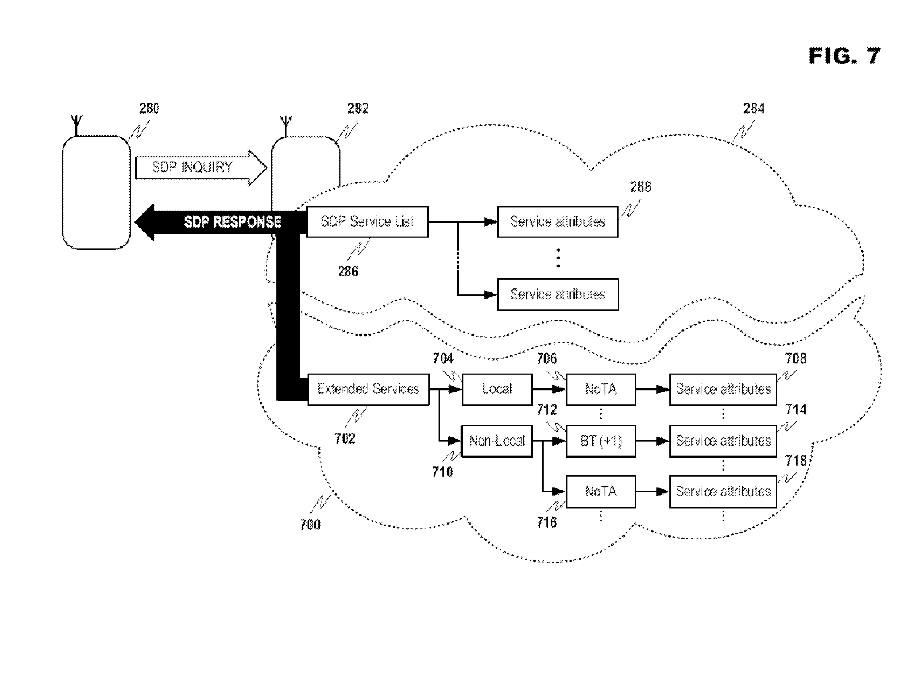

While multi-apparatus, transport-independent architectures such as NoTA possess a potential for greatly enhancing the array of functionality that can be offered in an apparatus, the growth of such systems may be impeded by limitations imposed by low-level processes such as service discovery. In accordance with various embodiments of the present invention, an example of enhanced service discovery is now disclosed with respect to FIG. 7. Bluetooth SDP structure 284, which was initially described with respect to FIG. 2C, may be used as a basis in describing the embodiment of the present invention disclosed in FIG. 7. In response to an SDP inquiry sent by apparatus 280, apparatus 282 may again send a response including service identification and attribute information. If apparatus 282 is not operating as a service information holder, then the response may be limited to only the service information shown inside of 284. SDP Service list 286 may comprise service attributes 288 pertaining to services available on apparatus 282. These services may be deemed "local" services since they are provided by the apparatus itself.

However, it is also possible for apparatus 282 to operate as a service information holder apparatus representing a group of apparatuses. In accordance with various embodiments of the present invention, one or more service information holder apparatuses may collect and/or maintain service information from other apparatuses in the group. This mode of operation can be signaled to apparatus 280 as part of a response to an initial inquiry. For example, in an Extended Inquiry Response (EIR) message where Bluetooth is being employed. At least one benefit that may be realized from this activity is that service information pertaining to multiple apparatuses in the group may be available from a single apparatus. Moreover, if configured as set forth in the example of FIG. 7, not only will service information pertaining to services that operate using the wireless communication protocol being employed (e.g., Bluetooth) be available, but also service information corresponding to services that operate using other communication protocols.

After the identification of a service information holder apparatus, apparatus 280 may request information about services by transmitting an SDP inquiry. A message including both SDP information, as disclosed at 284, and the extended information disclosed at 700 may be sent in response. Extended services 702 may comprise both "local" services 704 and "non-local" services 710. Similar to SDP service list 286, local services 704 may include services that reside on apparatus 282. However, local services 704 may not have been included in service list 286 by the Bluetooth resources 284. For example, these services may comprise NoTA-related services 706, which comprise non-Bluetooth (e.g., transport-independent) services on apparatus 282 for supporting various communication services for interacting in NoTA environments. Similar to SDP Service list 286, services like NoTA 706 may be provided along with service attributes 708. While NoTA services 706 has been utilized for the sake of example herein, local services 704 is not strictly limited to these services. Various embodiments of the present invention may include or omit NoTA services 706 along with other services not been specifically identified in FIG. 7.

Extended services 702 may also include non-local services 710, comprising service information provided by other apparatuses that may have been previously in communication with apparatus 282. The available service information provided to apparatus 282 may be cumulative, meaning that a single apparatus may provide service information corresponding to a plurality of apparatuses that was collected during previous encounters with these apparatuses. For example, BT (+1) sub-category 712 of non-local services 710 may identify Bluetooth services that are available on other apparatuses, as accumulated through previous encounters by apparatus 282. Services attributes 714 for each of the services listed under BT (+1) category 712 may also be available. It is also possible for other categories under local services 706 to be duplicated in non-local services 710, which pertains primarily to services residing on other apparatuses. For example, NoTA services 716 under non-local services 710 is also listed under local services 704. However, the content of NoTA services 706 and 716, including service attributes 708 and 718 respectively, are different as the latter category pertains to services located on other apparatuses. Again, the categories shown in FIG. 7 have been selected merely for the sake of explanation herein, and are not meant to limit the scope of the various embodiments of the present invention.

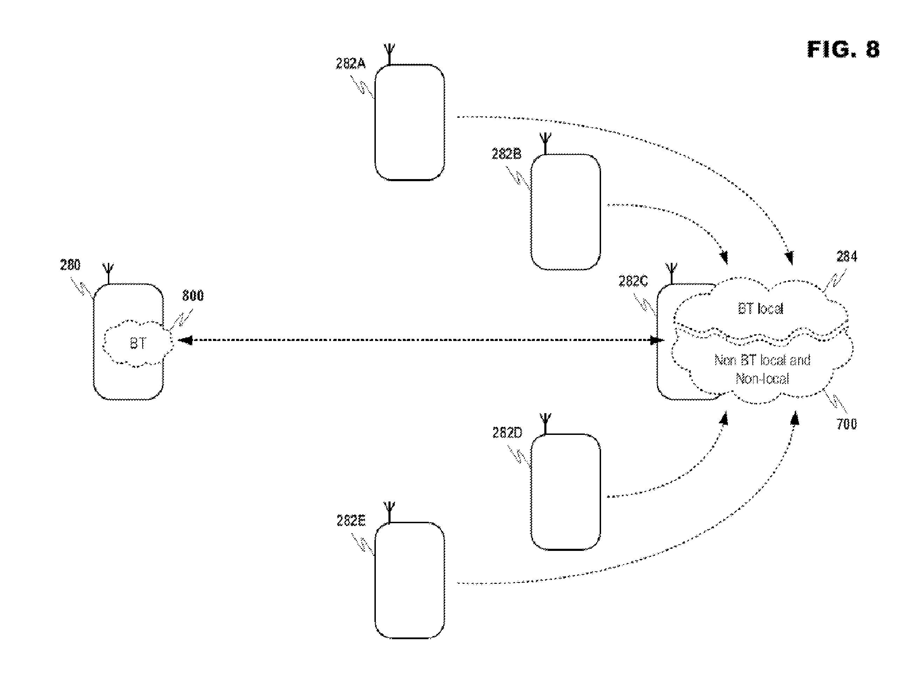

Without in any way limiting the scope, interpretation, or application of the claims appearing below, a technical effect that may be realized through implementation of at least one embodiment of the present invention, explained with respect to the example scenario originally discussed in FIG. 2D, is disclosed in FIG. 8. Apparatus 280 may interact with only apparatus 282C, instead of with each of apparatuses 282A to 282E individually, when requesting service information for all of the apparatuses disclosed in FIG. 8. This option is available because apparatus 282C is a service information holder that previously received service information from the other apparatuses 282A to 282E. Service information corresponding to local non-Bluetooth (BT) services and non-local services 700, combined with local BT service information 284, may be collected and/or maintained by apparatus 282C. Furthermore, since all of the aforementioned service information is available via Bluetooth connection 800, the Bluetooth communication burden on apparatus 280 is greatly reduced, while being able to provide substantially more service information (e.g., local and non-local, Bluetooth and non-Bluetooth, etc.) than was previously available in existing systems. Obtaining service information in accordance with embodiments of the present invention, such as disclosed in FIG. 8, may reduce the time required for apparatus 280 to obtain service information, which may contribute to resource savings (e.g., power conservation) already realized from only having to utilize one communication interface.

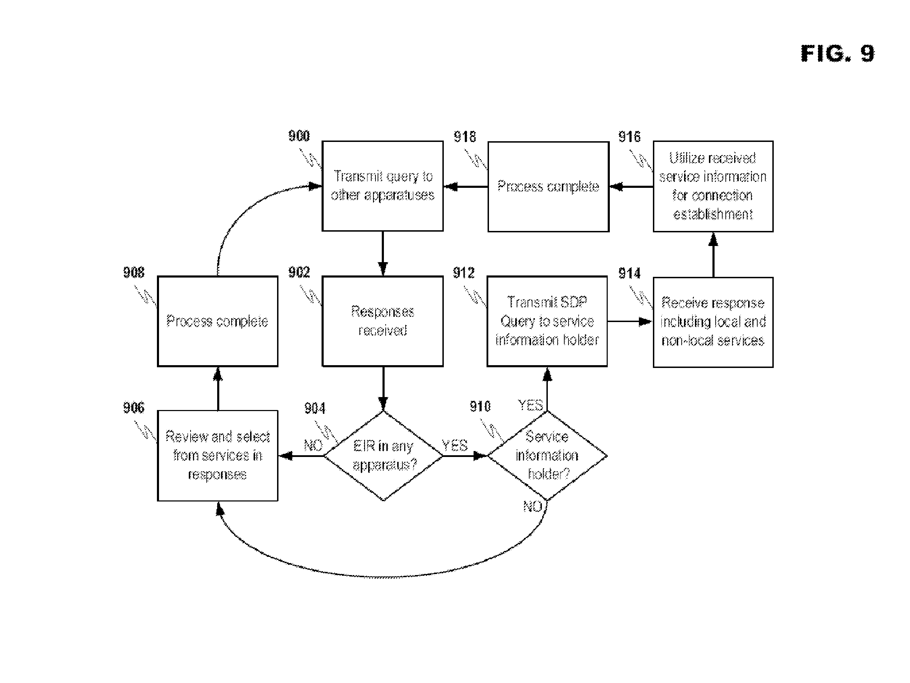

In accordance with at least one embodiment of the present invention, a flowchart of an example service request process, taken from the standpoint of an inquiring apparatus, is disclosed in FIG. 9. A query is transmitted to other apparatuses within communication range of the particular wireless communication protocol being employed in step 900. The responses received in step 902 may be analyzed to determine if any of the responses include an extended inquiry response (EIR), or similar structure. If none of the responses contain an EIR, per step 904, then in step 906 the inquiring apparatus may review and/or select any of the apparatuses identified in the received responses. To discover the service information available in a selected apparatus, a service discovery protocol (SDP) message, or similar structure, may be transmitted to a service information holder apparatus using the SDP profile. The process may then terminate in step 908 and return to step 900 to await the next inquiry.

Alternatively, if at least one of the responses received in step 902 does include EIR information as determined in step 904, a determination may be made as to whether the EIR information indicates that any of the responding apparatuses are service information holders. If in step 910 no service information holders are identified, then the process may return to step 906 to review/select from the available services. However, if at least one of the responses indicate that a service information holder is present, then in step 912 a service discovery protocol (SDP) message, or similar structure, may be transmitted to a service information holder apparatus. A response may then be received in step 914 including local and non-local service information, such as previously disclosed in connection with FIG. 7. Some situations may require multiple occurrences of sending a query message being followed by receiving a response for an apparatus to obtain all of the available local and non-local service information.

In accordance with at least one embodiment of the present invention, the local and non-local service information that is received in step 914 may be considered service advertising information, which may be usable as a "road map" for obtaining access to desired services on the service information holder apparatus or another apparatus. As a result, in step 916 the utilization of received service information may include connection establishment using the same wireless communication protocol, or via different wired/wireless communication protocols, to the service information holder apparatus or other apparatuses based on the received service information. The process may then terminate in step 918 and return to step 900 to transmit the next inquiry.

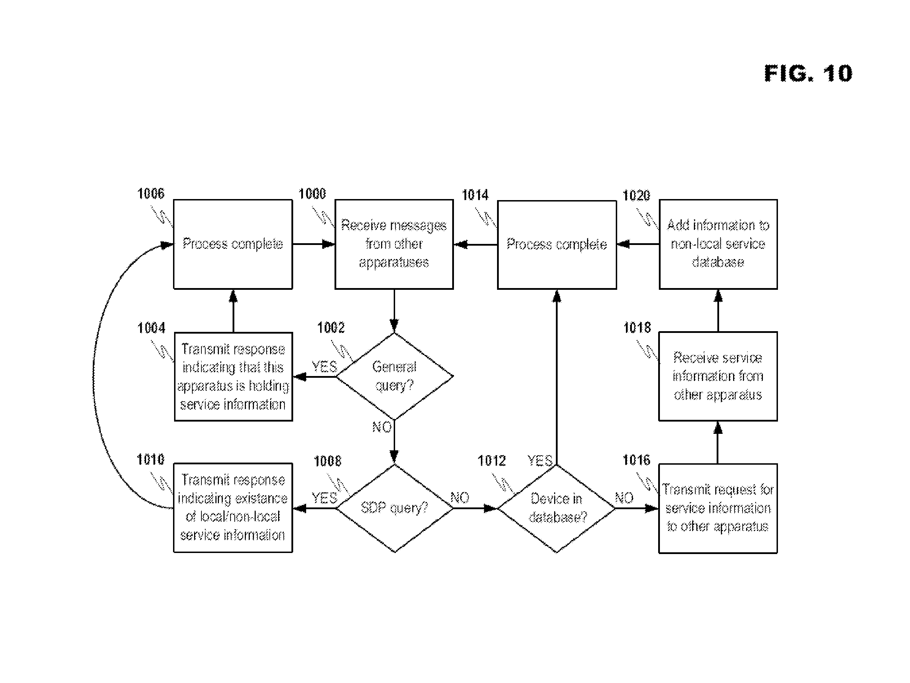

Another flowchart for an example service request process from the standpoint of a service information holder apparatus, in accordance with at least one embodiment of the present invention, is now disclosed in FIG. 10. Messages are received from other apparatuses in step 1000. If the received message contains a general query, then in step 1004 a response may be transmitted indicating that the transmitting apparatus is a service information holder apparatus (e.g., if the querying apparatus supports EIR, or a similar structure). The process may then terminate in step 1006 and return to step 1000 in order for the apparatus to be ready to receive more wireless messages.

Otherwise, a further determination may be made in step 1008 as to whether any of the received messages contain SDP queries. If any of the received messages contains an SDP query, then in step 1010 the process may transmit a response message comprising local and/or non-local service information. Local service information may, in some instances, include both information corresponding specifically to services that operate using the wireless communication protocol in use, and also information corresponding to services that do not operate using the current wireless communication protocol, that are available from the service information holder apparatus. Non-local service information may comprise information provided, for example, by apparatuses previously encountered by the service information holder apparatus, about services available from apparatuses other than the service information holder apparatus including service information corresponding specifically to services that operate using the wireless communication protocol in use, and also information corresponding to services that do not operate using the current wireless communication protocol. The process may then terminate in step 1006 and return to step 1000 in order for the apparatus to be ready to receive more wireless messages.

If in step 1008 the received messages are determined not to comprise service SDP queries, then in step 1012 a determination may be made as to whether service information from the apparatuses corresponding to the received messages has already been included in the non-local service information collected and maintained by the service information holder apparatus. If service information from the corresponding apparatus has already been collected, then the process may terminate in step 1014 and may return to step 1000 in order to receive more wireless messages. However, if the service information of the device is not already in the database of the service information holder apparatus, the service information holder apparatus may transmit a message requesting available service information from the apparatuses corresponding to the received messages in step 1016. A response to the request transmitted in step 1016, including available service information, may then be received in the service information holder apparatus in step 1018. This information may comprise service identification information, attribute information, etc., which may then be incorporated into a non-local service information database being maintained by the service information holder apparatus in step 1020. The process may then terminate in step 1014 and return to step 1000 in order to receive more wireless messages.

The various embodiments of the present invention are not limited only to the examples disclosed above, and may encompass other configurations or implementations.

For example, example embodiments of the present invention may encompass apparatuses comprising means for transmitting a wireless query from an apparatus, means for receiving responses to the wireless query from other apparatuses, means for determining if any of the responses identify a responding apparatus as a service information holding apparatus configured to maintain service information related to the other apparatuses in addition to service information related to the responding apparatus, means for, if a response identifies a service information holding apparatus, transmitting a service information request to the service information holding apparatus, and means for receiving a response to the service information request, the response including service information related to one or more other apparatuses in addition to the service information holding apparatus.

At least one other example embodiment of the present invention may include apparatuses comprising means for receiving wireless messages from other apparatuses at a service information holding apparatus, means for determining if the received wireless messages include service discovery requests, means for, if the received wireless messages include service discovery requests, transmitting responses to the service discovery requests, the responses including at least local service and non-local service information, and means for, if the received wireless messages do not include service discovery requests, transmitting service information requests to apparatuses corresponding to the received wireless messages and storing service information received in response to the service information requests.

At least one other example embodiment of the present invention may include electronic signals that cause apparatuses to transmit a wireless query from an apparatus, receive responses to the wireless query from other apparatuses, determine if any of the responses identify a responding apparatus as a service information holding apparatus configured to maintain service information related to the other apparatuses in addition to service information related to the responding apparatus, if a response identifies a service information holding apparatus, transmit a service information request to the service information holding apparatus, and receive a response to the service information request, the response including service information related to one or more other apparatuses in addition to the service information holding apparatus.

At least one other example embodiment of the present invention may include electronic signals that cause apparatuses to receive wireless messages from other apparatuses at a service information holding apparatus, determine if the received wireless messages include service discovery requests, if the received wireless messages include service discovery requests, transmit responses to the service discovery requests, the responses including at least local service and non-local service information, and if the received wireless messages do not include service discovery requests, transmit service information requests to apparatuses corresponding to the received wireless messages and storing service information received in response to the service information requests.

Accordingly, it will be apparent to persons skilled in the relevant art that various changes in forma and detail can be made therein. The breadth and scope of the present invention should not be limited by any of the above-described example embodiments, but should be defined only in accordance with the following claims and their equivalents.

## Claims

1. A method, comprising:
transmitting a wireless query from an apparatus;
receiving responses to the wireless query from other apparatuses;
determining if any of the responses identify a responding apparatus as a service information holding apparatus configured to maintain service information related to the other apparatuses in addition to service information related to the responding apparatus;
if a response identifies a service information holding apparatus, transmitting a service information request to the service information holding apparatus; and
receiving a response to the service information request, the response including service information related to one or more other apparatuses in addition to the service information holding apparatus.

2. The method of claim 1, wherein holding service information comprises maintaining at least service identification information, attribute information for the identified service and information identifying the other apparatus on which the identified service resides.

3. The method of claim 2, wherein service identification information comprises information identifying services that are accessible via other communication protocols.

4. The method of claim 2, wherein attribute information for the identified service comprises at least one of information usable for accessing the identified service via an alternative communication protocol and information usable for accessing the identified service on apparatuses other than the responding apparatus.

5. The method of any of claims 1-4, wherein the response to the wireless query comprises service information provided directly from the responding apparatus and the response to the service information request comprises service information that was provided by at least one of the other apparatuses that was previously in communication with the responding apparatus.

6. A method, comprising:
receiving wireless messages at a service information holding apparatus;
determining if the received wireless messages include service discovery requests;
if the received wireless messages include service discovery requests, transmitting responses to the service discovery requests, the responses including at least local service information and non-local service information; and
if the received wireless messages do not include service discovery requests, transmitting service information requests to apparatuses corresponding to the received wireless messages and storing service information received in response to the service information requests.

7. The method of claim 6, wherein local service information relates to services that are available from the service information holding apparatus and non-local service information relates to services that are available from other apparatuses that have been in communication with the service information holding apparatus.

8. A computer program comprising computer readable program code configured to cause performing of the method of any of the preceding claims when said program is run on a computer.

9. The computer program of claim 8, wherein the computer program is a computer program product comprising a computer-readable medium bearing computer program code embodied therein for use with a computer.

10. An apparatus, comprising:
at least one processor; and
at least one memory including executable instructions, the at least one memory and the executable instructions being configured to, in cooperation with the at least one processor, cause the apparatus to perform at least the following:
transmit a wireless query from the apparatus;
receive responses to the wireless query from other apparatuses;
determine if any of the responses identify a responding apparatus as a service information holding apparatus configured to maintain service information related to the other apparatuses in addition to service information related to the responding apparatus;
if a response identifies a service information holding apparatus, transmit a service information request to the service information holding apparatus; and
receive a response to the service information request, the response including service information related to one or more other apparatuses in addition to the service information holding apparatus.

11. The apparatus of claim 10, wherein holding service information comprises maintaining at least service identification information, attribute information for the identified service and information identifying the other apparatus on which the identified service resides.

12. The apparatus of claim 11, wherein service identification information comprises information identifying services that are accessible via other communication protocols.

13. The apparatus of claim 11, wherein attribute information for the identified service comprises at least one of information usable for accessing the identified service via an alternative communication protocol and information usable for accessing the identified service on apparatuses other than the responding apparatus.

14. The apparatus of any of claims 10-13, wherein the response to the wireless query comprises service information provided directly from the responding apparatus and the response to the service information request comprises service information that was provided by at least one of the other apparatuses that was previously in communication with the responding apparatus.

15. A service information holding apparatus, comprising:
at least one processor; and
at least one memory including executable instructions, the at least one memory and the executable instructions being configured to, in cooperation with the at least one processor, cause the apparatus to perform at least the following:
receive wireless messages from other apparatuses;
determine if the received wireless messages include service discovery requests;
if the received wireless messages include service discovery requests, transmit responses to the service discovery requests, the responses including at least local service and non-local service information; and
if the received wireless messages do not include service discovery requests, transmit service information requests to apparatuses corresponding to the received wireless messages and storing service information received in response to the service information requests.

16. The apparatus of claim 15, wherein local service information relates to services that are available from the service information holding apparatus and non-local service information relates to services that are available from other apparatuses that have been in communication with the service information holding apparatus.
